# EUROPEAN PATENT APPLICATION

(11) **EP 2 258 595 A1**
(43) Date of publication of application: **08.12.2010**
(21) Application number: 09165550.6
(22) Date of filing: 15.07.2009
(51) Int. Cl.: B61D 19/02, B32B 43/00

(54) **System and method for a railway car door repair**

(30) Priority: 04.06.2009 US 478425
(71) Applicant: Ellcon National, Inc., Greenville, SC 29604 (US)
(72) Inventor: Remick, Glenn, Simpsonville, SC 29680 (US); Carl, Ralph, Greenville, SC 29605 (US)
(74) Representative: Gray, James

(57) **Abstract**

A method of repairing a laminate railway car door (10) comprises the steps of forming a plurality of holes (32) through a laminated door (10), the door (10) having an internal surface (12) and an opposite external surface (14). A first strip (36) is placed adjacent one of the internal and the external surfaces (12,14). A second strip (38) is placed adjacent to the other of the internal and the external surfaces (12,14). The first strip (36) is secured to the second strip (38) so that the laminated door (10) is squeezed between the first and the second strips (36,38).

## Description

### FIELD OF THE INVENTION

The present invention relates generally to railway car doors. More particularly, the present invention relates to a system and method for repairing a laminate railway car door.

### BACKGROUND

Railway passenger cars contain laminate sliding doors. Laminate doors are lightweight, yet strong. However, laminate doors may delaminate. That is, the inner or outer skin may peel or buckle away from an inner core of the door. During operation, when the door slides open or closed, the delaminated skin can catch onto the walls of the door pocket causing the door to jam. Thus, when delamination is detected, the door is usually replaced. This solution presents additional problems and fails to provide an inexpensive and quick repair.

### SUMMARY OF THE INVENTION

The present invention recognizes and addresses disadvantages of prior art constructions and methods, and it is an object of the present invention to provide a system and method for repairing a laminate railway car door. This and other objects may be achieved by a repaired railway car door comprising a railway car door having a first outer skin, a second outer skin, and a core positioned intermediate the first and second outer skins. A first strip has a plurality of posts formed thereon; each of the posts having a blind bore formed therein, wherein a wall of the blind bore defines a thread thereon. A second strip defines a plurality of holes therethrough. A plurality of fasteners secures the first strip to the second strip. The railway car door defines a plurality of holes formed therethrough extending through the first and second outer skins and the core. The first strip is placed adjacent one of the first and the second outer skins so that each of the strip posts is received in a respective one of the plurality of door holes, and the second strip is placed adjacent the other one of the first and the second outer skins so that each of the plurality of second strip holes aligns with a respective one of the plurality of door holes. Each of the fasteners is received through a respective second strip hole and threadedly engages with the post thread.

In some embodiments, a first sealant is positioned intermediate the first strip and the one of the first and the second outer skins, and a second sealant is positioned intermediate the second strip and the other of the first and the second outer skins. In some embodiments, the first sealant is a gasket. In other embodiments, the second sealant is a silicon based sealant. In some of these embodiments, the gasket is formed from rubber.

In yet other embodiments, the fastener is a screw.

In other preferred embodiments, a method of repairing a laminate railway car door comprises the steps of forming a plurality of holes through a laminated door, the door having an internal surface and an opposite external surface. A first strip is placed adjacent one of the internal and the external surfaces. A second strip is placed adjacent to the other of the internal and the external surfaces. The first strip is secured to the second strip so that the laminated door is squeezed between the first and the second strips.

In some embodiments, the first strip defines a plurality of posts, where each of the plurality of posts are received in a respective door hole, and the second strip defines a plurality of holes therethrough so that each of the plurality of second strip holes align with a respective door hole.

In yet other embodiments, the step of securing the first strip to the second strip further comprises inserting a fastener through each of the second strip holes so that each of the fasteners engage a respective first strip post. In some of these embodiments, each of the posts defines a threaded bore therein.

In other embodiments, the fastener is a screw. In yet other embodiments, a recessed area is formed around each of the second strip holes.

In some embodiments, the method further comprises the step of placing a sealant between one of the first strip and the door and the second strip and the door.

In another preferred embodiments, a method of repairing a laminate railway car door comprises the steps of forming a plurality of holes through a laminated door, the door having an internal surface and an opposite external surface and a core therebetween. A first strip is placed adjacent one of the internal and the external surfaces, the first strip defining a plurality of threaded bores formed therein. A second strip is placed adjacent to the other of the internal and the external surfaces, where the second strip defines a plurality of holes formed therethrough. A plurality of fasteners are each inserted in a respective second strip hole. The first strip is secured to the second strip by engaging each of the fasteners with a respective threaded bore formed in the first strip.

In some embodiments, the first strip defines a plurality of posts where each of the plurality of posts defines a respective one of the threaded bores. Each of the plurality of posts is received in a respective door hole. In other embodiments, the fastener is a screw. In yet other embodiments, a recessed area is formed around each of the second strip holes.

In yet other embodiments, method further comprises the step of placing a sealant between one of the first strip and the door and the second strip and the door. In some embodiments, the sealant is silicon based. In other embodiments, the sealant is a gasket.

Various combinations and sub-combinations of the disclosed elements, as well as methods of utilizing same, which are discussed in detail below, provide other objects, features and aspects of the present invention.

### BRIEF DESCRIPTION OF THE DRAWINGS

A full and enabling disclosure of the present invention, including the best mode thereof, to one of ordinary skill in the art, is set forth more particularly in the remainder of the specification, including reference to the accompanying drawings, in which:
Figure 1 is a partial side elevation view of a prior art railway car;
Figure 1A is a partial side elevation view of a laminate railway car door of Figure 1;
Figure 2 is a top view of the prior art laminate railway car door of Figure 1A;
Figure 3 is side view of the prior art laminate railway car door of Figure 1A;
Figure 4 is partial front view of a laminate railway car door in accordance with one embodiment of the present invention;
Figure 5 is a top view of the laminate railway car door of Figure 4;
Figure 6 is a side elevation view of the laminate railway car door of Figure 4;
Figure 7 is a partial front view of a repaired laminate railway car door in accordance with an embodiment of the present invention;
Figure 8 is top view of a repair strip for use in carrying out the repair to the laminate railway car door of Figure 4;
Figure 9 is a side view of the repair strip of Figure 8;
Figure 10 is a side view of the repair strip of Figure 8;
Figure 11 is a top view of a second repair strip for use in carrying out the repair to the laminate railway car door of Figure 4;
Figure 12 is a side view of the second repair strip of Figure 11;
Figure 13 is a side view of the repaired laminate railway car door of Figure 7; and
Figure 13A is an exploded view of a portion of the repaired laminate railway car door of Figure 13.

Repeat use of reference characters in the present specification and drawings is intended to represent same or analogous features or elements of the invention according to the disclosure.

### DETAILED DESCRIPTION OF THE PREFERRED EMBODIMENT

Reference will now be made in detail to presently preferred embodiments of the invention, one or more examples of which are illustrated in the accompanying drawings. Each example is provided by way of explanation, not limitation, of the invention. It is to be understood by one of ordinary skill in the art that the present discussion is a description of exemplary embodiments only, and is not intended as limiting the broader aspects of the present invention, which broader aspects are embodied in the exemplary constructions. In fact, it will be apparent to those skilled in the art that modifications and variations can be made in the present invention without departing from the scope and spirit thereof. For instance, features illustrated or described as part of one embodiment may be used on another embodiment to yield a still further embodiment. Thus, it is intended that the present invention covers such modifications and variations as come within the scope of the appended claims and their equivalents.

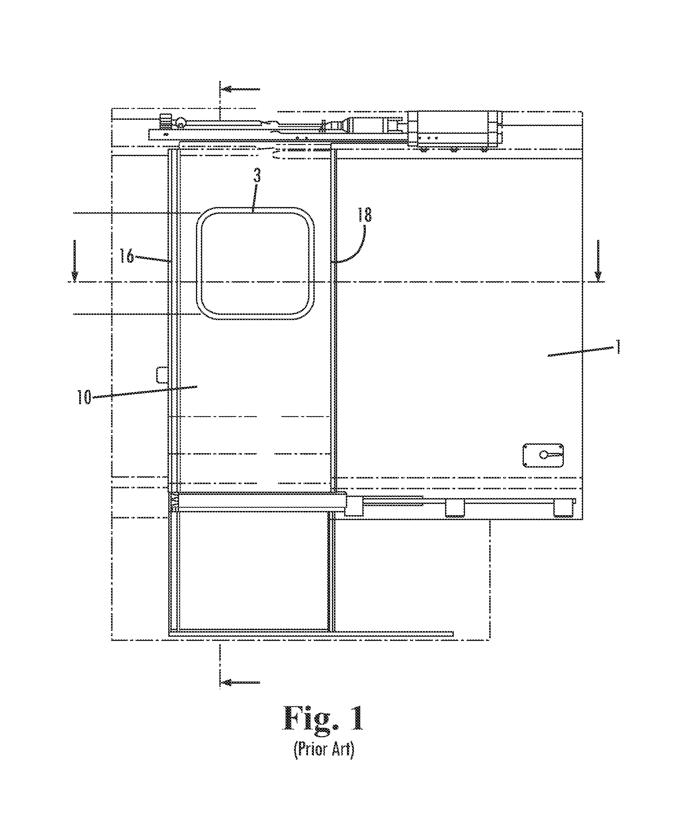

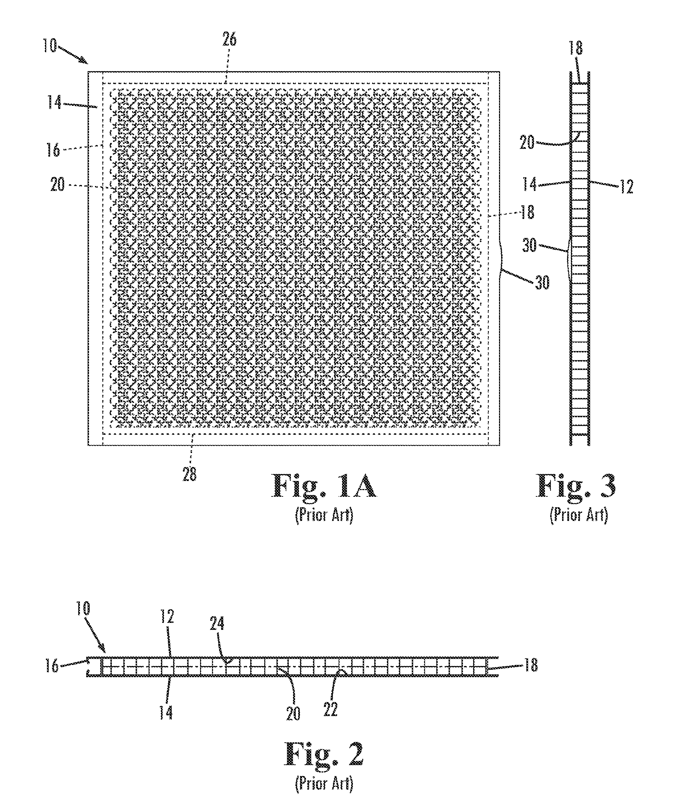

Referring to Figure 1, a prior art a railway car 1 is shown having a sliding door 10. Passengers gain access to railway car 1 by means of a set of steps (not shown) arranged inside the vehicle. Door 10 is mounted so that it slides between an open and closed position. Door 10 consists of a single leaf laminate having an internal face (skin) 12 (Figure 2) directed toward an inside of the vehicle and an external face (skin) 14 directed toward an outside of the vehicle. A window 3 may be located in an upper portion of door 10. However, it should be understood that window 3 is optional.

Referring to Figures 1A - 3, a portion of door 10 is shown having internal face 12 and external face 14. The internal and external faces are bonded to a honeycomb structure 20 that is positioned intermediate the two external surfaces. Door 10 is bound on its sides by a first rail 16 and an opposite second rail 18. A top rail 26 and bottom rail 28 are positioned at a top and bottom of the door panel. Internal face 12 and external face 14 are bonded to honeycomb structure 20 by a respective bonding material 24 and 22. Bonding material 24 and 22 may be an adhesive, metal or other suitable bonding material.

Referring specifically to Figure 1, door 10 operates by sliding with respect to railway car 1. The door either slides adjacent to an outer surface of railway car 1 or into a pocket formed in the wall of the car. In either case, because door internal and external surface 12 and 14 are bonded to a core material, either one or both may delaminate from honeycomb structure 20. That is, buckling 30 (Figures 1A and 3) may occur where external surface 14 pulls away from honeycomb structure 20. Buckling 30 may cause damage to the railway car wall or failure of door 10 as the door slides into an open or closed position.

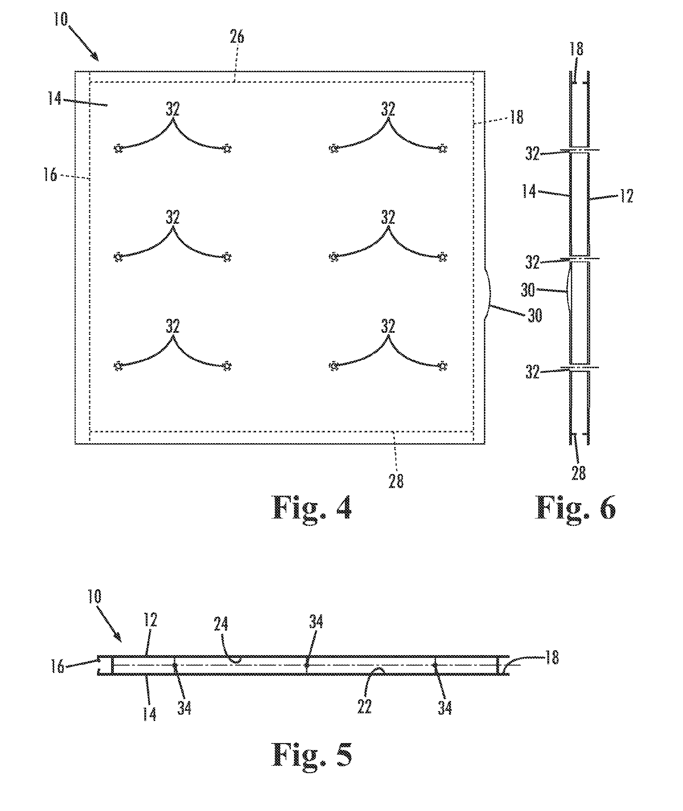

Referring to Figures 4 - 6, door 10 is shown having buckling 30. In the embodiment shown in the figures, buckling 30 is shown at an edge surface where external surface 14 is pulled away from honeycomb structure 20. It should be understood that delamination may also occur in a center portion of door panel 10. When delamination occurs in a portion of door 10 away from an edge, oil canning may occur. Oil canning occurs when the internal or external surface moves with respect to the core making a popping noise. Regardless of the type of delamination, the present invention secures corrects the delamination and prevent further delamination.

Referring to Figures 4 - 6, the first step in repairing door 10 requires a plurality of holes 32 to be drilled through door 10. Holes 32 extend through the internal and external surfaces 12 and 14. In one preferred embodiments, holes 32 are formed 2.75 inches from one side of door 10 and are formed horizontally across the door every 7 inches. Holes 32 are spaced 5 inches from a top edge and are spaced 7 inches in the vertical direction. It should be understood to those skilled in the art that the spacing between the holes may vary depending on the door construction and the extent of delamination.

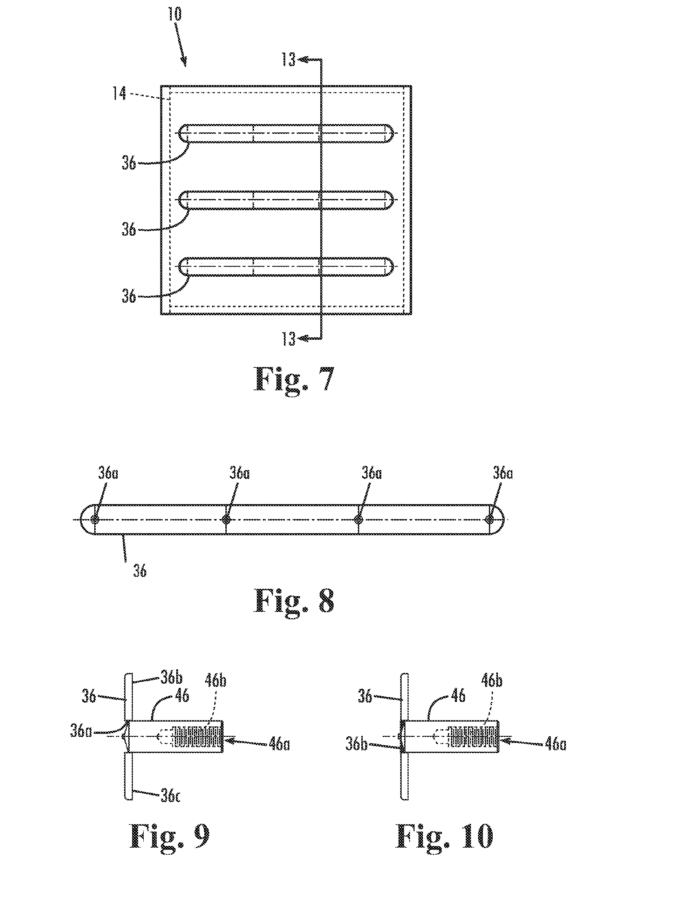

Referring to Figures 7 - 10, a plurality of strips 36 are positioned horizontally across the width of door 10. Referring in particular to Figure 8, strips 36 are formed from a base material having a plurality of holes 36a formed therethrough. Next, referring to Figure 9, a cylindrical post 46 is inserted in each strip hole 36a. Post 46 is cylindrical in cross-section and contains a blind bore 46a formed in one end thereof. A wall of blind bore 46a contains a thread 46b. Referring to Figure 10, post 46 is attached to strip 36 at 36b. The means of attachment may be welding, adhesive, or other suitable means that permanently attaches the post to the strip. In some embodiments, strip 36 and post 46 are integrally formed. In one preferred embodiment, bonding 36 is carried out by welding. Once welded, the outer surface of strip 36 is grinded and polished to produce a smooth surface. When attaching strips 36 to door panel external surface 14, posts 46 are inserted into respective door holes 32.

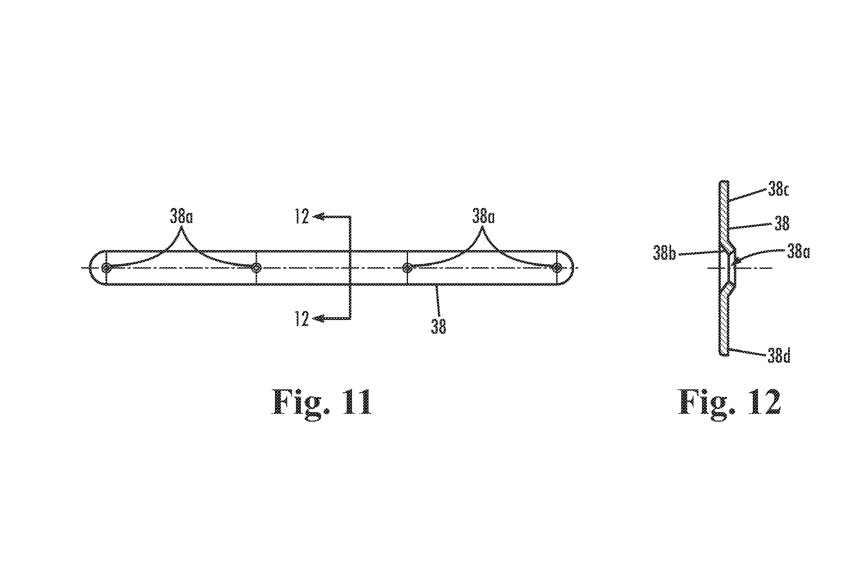

In Figures 11 and 12, a second strip 38 defines a plurality of holes 38a formed therethrough. Referring particularly to Figure 12, each hole 38a is formed at a recess 38b defined along the length of strip 38. Recess 38b allows for a head of a fastener inserted into hole 38a to be positioned flush with a strip outer surface. This helps to prevent anything from snagging on the head of the fastener and to create a smooth clean surface.

In one preferred embodiment, strips 36 and 38 are formed from a metallic material such as stainless steel, aluminum or other metal material. However, it should be understood that strips 36 and 38 may be formed from a polymer, ceramic or other suitable material.

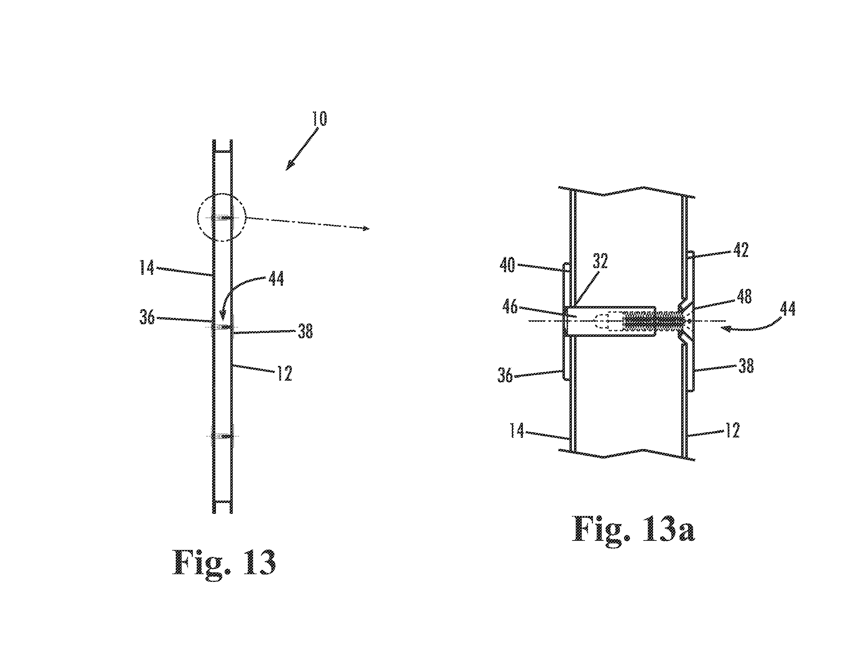

Referring to Figures 13 and 13a, a repaired laminated railway door 10 is shown. As previously discussed, the first step in repairing the door is to drill a plurality of holes through the door as described above with reference to Figures 4 - 6. The holes are generally formed along horizontal lines extending from one side of the door to the other. It should be understood that the horizontal line of holes may be made once across the door, or multiple horizontal lines of holes may be formed. Next, a sealing agent 40 (Figure 13a) is applied around the base of each post 46. The sealing agent may also extend between posts 46, and a bead of sealant may be applied proximate a top and bottom surface 36b and 36c (Figure 9) of strip 36. Once the sealant is applied, strip 36 is attached to external door surface 14 by inserting posts 46 into respective door holes 36. The strip is pressed into place so that the sealant partially adheres the strip to the outer door surface. It should be understood that the sealant does not permanently adhere the strip to the door panel but, temporarily retains the strip in place during the repair process.

A sealing agent 42 (Figure 13a) is also applied to an inner surface of strip 38 around strip holes 38a. The sealant may also extend between the holes and a bead of sealant may also be placed proximate a top and bottom edge 38c and 38d of the strip. Strip 38 is placed adjacent to door internal surface 12 so that strip holes 38a align with respective door holes 32. Once the strip is properly aligned, a screw 38 is inserted into each respective hole across strip 38 so that the screw engages with post threads 46b. Each screw 48 and post 46 together form a fastener 44. As the screw is tightened, the strips are pulled tightly against the internal and external surfaces of the door causing the door panels to be securely pressed against the honeycomb core structure. Additionally, as the strips are pressed against the internal and external surfaces, sealing agents 40 and 42 spread across the surfaces between the strips and the internal and external surfaces forming a fluid barrier that prevents or minimizes water and other fluids from entering through the holes formed in door 10.

Sealing agents 40 and 42 may be any suitable sealant such as a silicone or latex based sealant. It should be understood that other materials may be used to form a seal. For example, a rubber or polymer gasket may be used in place of a sealant.

While one or more preferred embodiments of the invention have been described above, it should be understood that any and all equivalent realizations of the present invention are included within the scope and spirit thereof. The embodiments depicted are presented by way of example and are not intended as limitations upon the present invention. Thus, those of ordinary skill in this art should understand that the present invention is not limited to these embodiments since modifications can be made. Therefore, it is contemplated that any and all such embodiments are included in the present invention as may fall within the scope thereof.

## Claims

1. A repaired railway car door comprising:
a. a railway car door having
i. a first outer skin,
ii. a second outer skin, and
iii. a core positioned intermediate said first and second outer skins;
b. a first strip having a plurality of posts formed thereon, each of said posts having a blind bore formed therein, wherein a wall of said blind bore defines a thread thereon;
c. a second strip defining a plurality of holes therethrough; and
d. a plurality of fasteners for attaching said first strip to said second strip,
wherein
said railway car door defines a plurality of holes formed therethrough extending through said first and second outer skins and said core,
said first strip is placed adjacent one of said first and said second outer skins so that each of said strip posts is received in a respective one of said plurality of door holes,
said second strip is placed adjacent the other one of said first and said second outer skins so that each of said plurality of second strip holes aligns with a respective one of said plurality of door holes, and
said fastener is received through said second strip hole and threadedly engaged with said post thread.

2. The repaired railway car door of claim 1, further comprising a first sealant positioned intermediate said first strip and said one of said first and said second outer skins and a second sealant positioned intermediate said second strip and said other of said first and said second outer skins.

3. The repaired railway car door of claim 2, wherein said first sealant is a gasket.

4. The repaired railway car door of claim 2, wherein said second sealant is a silicon based sealant.

5. The repaired railway car door of claim 3, wherein said gasket is formed from rubber.

6. The repaired railway car door of any preceding claim, wherein said fastener is a screw.

7. A method of repairing a laminate railway car door, said method comprising the steps of:
a. forming a plurality of holes through a laminated door, said door having an internal surface and an opposite external surface;
b. placing a first strip adjacent one of said internal and said external surfaces;
c. placing a second strip adjacent to the other of said internal and said external surfaces; and
d. securing said first strip to said second strip so that said laminated door is squeezed between said first and said second strips.

8. The method of claim 7, wherein
a. said first strip defines a plurality of posts, where each of said plurality of posts are received in a respective door hole; and
b. said second strip defines a plurality of holes therethrough so that each of said plurality of second strip holes align with a respective door hole.

9. The method of claim 8, the step of securing said first strip to said second strip further comprises inserting a fastener through each of said second strip holes so that each of said fasteners engage a respective first strip post.

10. The method of claim 8 or claim 9, wherein each of said posts defines a threaded bore therein.

11. The method of claim 9 or claim 10, wherein said fastener is a screw.

12. The method of any of claims 8 to 10, wherein a recessed area is formed around each of said second strip holes.

13. The method of any of claims 7 to 12, further comprising the step of placing a sealant between one of said first strip and said door and said second strip and said door.

14. A method of repairing a laminate railway car door, said method comprising the steps of:
a. forming a plurality of holes through a laminated door, said door having an internal surface and an opposite external surface and a core therebetween;
b. placing a first strip adjacent one of said internal and said external surfaces, said first strip defining a plurality of threaded bores formed therein;
c. placing a second strip adjacent to the other of said internal and said external surfaces, said second strip defining a plurality of holes formed therethrough;
d. inserting a plurality of fasteners, each in a respective second strip hole; and
e. securing said first strip to said second strip by engaging each of said fasteners with a respective threaded bore formed in said first strip.

15. The method of claim 14, wherein
a. said first strip defines a plurality of posts, where each of said plurality of posts define a respective one of said threaded bores; and
b. each of said plurality of posts is received in a respective door hole.

16. The method of claim 14 or claim 15, wherein said fastener is a screw.

17. The method of any of claims 14 to 16, wherein a recessed area is formed around each of said second strip holes.

18. The method of any of claims 14 to 17, further comprising the step of placing a sealant between one of said first strip and said door and said second strip and said door.

19. The method of claim 18, wherein said sealant is silicon based.

20. The method of claim 18, wherein said sealant is a gasket.
